# EUROPÄISCHE PATENTSCHRIFT

(11) **EP 0 801 662 B1**
(45) Veröffentlichungstag und Bekanntmachung des Hinweises auf die Patenterteilung: **10.10.2001**
(21) Anmeldenummer: 95940124.1
(22) Anmeldetag: 24.11.1995
(51) Int. Cl.: C08J 11/18

(54) **VERFAHREN FÜR DAS RECYCLING VON EPOXIDHARZ ENTHALTENDEN ERZEUGNISSEN**
PROCESS FOR RECYCLING EPOXY RESIN CONTAINING PRODUCTS
PROCEDE PERMETTANT DE RECYCLER DES PRODUITS CONTENANT DE LA RESINE EPOXY

(30) Priorität: 24.11.1994 DE 4443262; 01.06.1995 DE 19520895
(43) Veröffentlichungstag der Anmeldung: 22.10.1997
(73) Patentinhaber: Seijo-Bollin, Hans-Peter, 10967 Berlin (DE); Käufer, Helmut, 40822 Mettmann (DE)
(72) Erfinder: Seijo-Bollin, Hans-Peter, 10967 Berlin (DE); Käufer, Helmut, 40822 Mettmann (DE)
(86) Internationale Anmeldenummer: DE9501708
(87) Internationale Veröffentlichungsnummer: WO9616112

(56) Entgegenhaltungen:
- DD-A- 125 516
- DATABASE WPI Week 7914 Derwent Publications Ltd., London, GB; AN 79-26955B & JP,A,54 026 871 (SUMITOMO BAKELITE KK) , 28.Februar 1979
- DATABASE WPI Week 8435 Derwent Publications Ltd., London, GB; AN 84-218318 & SU,A,1 065 453 (CENT VOLZHSK TRANSF) , 7.Januar 1984
- DATABASE WPI Week 9243 Derwent Publications Ltd., London, GB; AN 92-355916 & SU,A,1 694 609 (MOSC SAPFIR WKS)
- DATABASE WPI Week 9511 Derwent Publications Ltd., London, GB; AN 95-080333 & RU,A,2 014 135 (MEKHANOBR-TEKHNOGEN STOCK CO) , 15.Juni 1994

## Beschreibung

Die Erfindung betrifft die Stofftrennung von Epoxidharz enthaltenden Erzeugnissen, Produkten und Stoffen, wie beispielsweise Leiterplatten und andere Stoffe, und die Wieder- und Weiterverwertung der im Recyclingprozeß entstandenen Trennprodukte.

Eine wirtschaftlich effektive und umweltfreundliche Lösung für das Recycling von Epoxidharzen und Epoxidharzverbunden ist zur Zeit nicht bekannt. Ein großer Teil der verschlissenen und nicht mehr gebrauchsfähigen Erzeugnisse und Stoffe werden durch Deponierung und Verbrennung entsorgt. Letzteres ist insbesondere bei flammgeschützten, epoxidharzhaltigen Erzeugnissen, wie beispielsweise Leiterplatten elektrischer/elektronischer Baugruppen, durch die bei der Verbrennung entstehenden Dioxine, ökologisch sehr bedenklich und gesundheitsgefährdend.

Bekannt ist ebenfalls die in mechanischen Partikelrecycling-Verfahren anfallenden, fein zermahlenen Epoxidharz enthaltenden Stoffe gegebenenfalls mit den inerten Füllstoff- und Verstärkungsmaterialanteilen, als Füllstoff bei der Herstellung von neuen Epoxidharzprodukten zu verarbeiten. Die Recyclate können jedoch aus Festigkeitsgründen nur bis zu ca. 30 % den Neuprodukten zugesetzt werden. Der Einsatz als Füllstoff stellt daher für die Recyclate gegenüber der Primäranwendung unter wirtschaftlichen und technologischen Gesichtspunkten nur eine minderwertige Verwendung dar.

Die Rückgewinnung von Epoxidharzen aus Metallverbunden erfolgt über aufwendige Feinmahl- und Dichtetrennverfahren mit nur mäßig guter Trennschärfe. Bei flammgeschützten, epoxidharzhaltigen Erzeugnissen, wie beispielsweise Leiterplatten, ist durch den Eintrag von Halogenen die Verwertung der Metallfraktion erschwert.

Mit großem Energie- und Kostenaufwand werden in Pyrolyseverfahren von epoxidharzhaltigen Produkten Rohstoffe erzeugt, die weder unter wirtschaftlichen noch unter ökologischen Gesichtspunkten mit Rohstoffen aus allgemein bekannten Herstellungsverfahren konkurrieren resp. diese ersetzen können.

Die Dioxinproblematik flammgeschützter Produkte stellt sich dabei ebenso wie in den Recyclingprozessen durch Verbrennung oder bei der metallurgischen Entsorgung.

Bekannt ist ein Verfahren zur Abtrennung von Metallen von einer Harzmatrix bei stark vorzerkleinertem Material durch Quellung der Harzmatrix in halogenhaltigen Lösungsmitteln und mechanischem Abschälen des gequollenen Harzes (JP-54.026871A ). Die eingesetzten Lösungsmittel sind allerdings stark toxisch und umweltschädigend (Tri- und Perchlorethylen, Dichlorbenzol, Brombenzol, etc.) Eine Verwertung ist nur für die Metallfraktion vorgesehen, die gequollene Harzmatrix fällt hierbei als stark mit halogenhaltigen Lösungsmitteln verunreinigte Sondermüllfraktion an. Eine Möglichkeit zur Wiedergewinnung von Verstärkungsgeweben, wie etwa silanisierten Glasfasern, wird ebenfalls nicht geboten.

In einem Verfahren zur Herstellung von Polyurethanformstoffen (DD-125516A) werden Polyurethane, Polyamide, Polyester, Polycarbonate, Epoxidharze und Polyoxymethylene als Einstoffsysteme alkoholysiert, dabei oder anschließend mit carboxylgruppenhaltigen Verbindungen umgesetzt und mit Polyisocyanaten zu Polyurethanformstoffen verarbeitet.

Verfahren zur Stofftrennung und umfassenden Verwertung komplexer Werkstoffverbunde und gemischter Schrotte mit einer Vielzahl beteiligter Materialien , wie sie für die Anwendung von Epoxidharzen typisch sind, gelten in der Fachwelt für Epoxidharze als ein nicht gangbarer Weg.

Der Erfindung liegt daher die Aufgabe zugrunde, ein wirtschaftliches, ökologisch vorteilhaftes Verfahren für das Recycling von epoxidharzhaltigen Produkten und Stoffen anzugeben, das durch eine bessere Trennung der stofflichen Bestandteile eine uneingeschränkte, vollwertige Wieder- oder Weiterrverwertung des recycelten polymeren Harzes und der inerten stofflichen Bestandteile ermöglicht.

Erfindungsgemäß wird die Aufgabe durch die im Anspruch 1 angegebenen Merkmale gelöst. Vorteilhafte Weiterbildungen der Erfindung ergeben sich aus den Unteransprüchen 2 bis 17. In Abhängigkeit von den eingesetzte Lösungsmitteln und der Verfahrensführung werden mit Hilfe der erfindungsgemäßen Lösung aus den zu recycelnden epoxidharzhaltigen Materialien lösliche Polymere und gegebenenfalls reaktive Lösungsmittelanteile enthaltende Polymere, Oligomere, Monomere und Gemisch daraus gewonnen, die beispielsweise auf einfache und wirtschaftlich günstige Weise für die Herstellung neuer Harzprodukte einsetzbar sind.

Das Recyclingverfahren wird bei erhöhten Prozeßtemperaturen von 140° - 280° und gegebenenfalls einem erhöhten Druck unter vorteilhafter Einwirkung mechanischer Kräfte, wie beispielsweise Rühren, Friktionswäsche oder Ultraschall, durchgeführt, wobei die Prozeßdauer 2 - 10 Stunden betragen kann.

Die mit Hilfe der Lösungsmedien behandelten teilweise bis stark abgebauten Epoxidharze liegen in flüssiger bis zähflüssiger Phase als Gemisch mit Lösungsmittel vor, um auf einfache Weise die ungelösten, festen und anderen inerten Bestandteile, wie z.B. Glasfasern oder Metalle, die in dem zu recycelnden Material enthalten sind etwa durch mechanische Verfahren, wie Herausgreifen, Sieben, oder durch Zentrifugation, sowie andere Dichtetrennverfahren, die dem Stand der Technik entsprechen, abzutrennen oder gleich in weitere Einzelfraktionen aufzuteilen.

Die weitere Auftrennung der Inertfraktionen kann mit den Verfahren, wie beschrieben, direkt in den Auflösungsprozeß integriert oder gegebenenfalls nach Mahlen des zu recycelnden Materials mit gleichartigen Verfahren, zu denen noch das Windsichten hinzukommt, in nachfolgenden Schritten erfolgen, wobei zunächst ein mechanischer Stofftrennprozeß und dann der chemische Behandlungsprozeß vorgenommen werden sollte.

Die weitere Aultrennung der Inertfraktion in Einzelfraktionen erlaubt eine bessere Verwertung der Einzelfraktionen, beispielsweise die der Glasfasern, die als Verstärkungsmaterialien bei der Herstellung neuer Harzprodukte unter Verwendung des polymeren Abbauproduktes eingesetzt werden können und dazu in der Flüssigkeit belassen oder dorthin wieder zurückgeführt werden.

Das Abtrennen der Inertfraktion(en) kann vorteilhafterweise durch Abspülverfahren erfolgen, wobei zum Abspülen die gleichen Medien wie für den Auflösungsprozeß oder andere, bekannte Spülmedien verwendet werden.

Mit der Überführung der Epoxidharze in eine flüssige Phase wird neben einem einfachen und leichten Recycling der im Ausgangsmaterial enthaltenen Metall- und Glasfaserbestandteile eine Trennung dieser Materialbestandteile von den Halogenen erreicht. Das einpolymerisierte Flammschutzmittel wird in gesonderten, teilweise bereits bekannten Verfahren aus dem polymeren Abbauprodukt herausgelöst oder verbleibt als Bestandteil in den aus dem Abbauprodukt hergestellten Erzeugnissen.

Mit dem Verfahren nach Anspruch 1 können die polymeren Abbauprodukte auf effektive Weise zur Herstellung von Klebstoffen, Lacken, Beschichtungen, sowie duromeren oder elastomeren Formmassen eingesetzt werden. Dazu wird das polymere Abbauprodukt einer Aufbaureaktion zugeführt, in der die Flüssigkeitsphase des Abbauproduktes in die Aufbaureaktion miteinbezogen oder wenn sie nicht weiter benötigt wird, abgetrennt wird.

Das Abtrennen der Flüssigkeitphase erfolgt durch Verdampfung, wie etwa durch Sprühtrocknung und/oder durch Ausfällen der Polymere aus der Flüssigkeit. Unerwünschte niedermolekulare Abbauprodukte verbleiben im Ausfällprozeß beim Fällungsmittel. Als Fällungsmittel werden mäßig bis unpolare Flüssigkeiten oder Wasser und wäßrige Lösungen, insbesondere Säuren und Laugen, eingesetzt.

Die Aufbaureaktion erfolgt, vorzugsweise als Vernetzungsreaktion, mit Hilfe Reaktionsmitteln nach Anspruch 13 und 14. Je nach Reaktionsmittel können übliche Katalysatoren zugesetzt werden. Das polymere Abbauprodukt wird mit dem Reaktionsmittel gemischt, wobei die Reaktion dann vorzugsweise direkt nach der Formgebung am Verbundpartner oder in einem Formwerkzeug erfolgt.

Vor der Reaktion können auch marktübliche Stabilisatoren, Farbstoffe oder Verstärkungsmaterialien zugegeben werden, mit denen das neue Harzprodukt auf seine weitere Anwendung eingestellt wird.

Bei Einbeziehung der Flüssigkeitsphase in die Aufbaureaktion werden vorzugsweise Medien mit mehreren funktionellen Gruppen, wie zum Beispiel Glykole oder Diamine, eingesetzt. Die Flüssigkeitsphase kann dabei gleichzeitig als Füllung in Poren von geschäumten Kunststoffen verwendet werden. Die Einbindung der Flüssigkeitsphase in das Polymer erfolgt bei Lösungsmittelrestgehalten im gefällten Abbauprodukt und/oder direkt durch Vernetzung des Abbauproduktes, bestehend aus Flüssigkeitsphase und gelöstem Polymer/Oligomer.

Die Vernetzungsreaktion wird dabei vorzugsweise direkt im Anschluß an die Abbaureaktion durchgeführt. Der Abbau wird dann durch ein Absenken der Temperatur gestoppt und die Restwärme zum Starten der Aufbaureaktionen genutzt.

Nach dem erfindungsgemäßen Verfahren können die zu recycelnden, epoxidharzhaltigen Produkte und Stoffe sowohl in demontierter oder zerkleinerter Form als auch in unzerkleinerter oder undemontierter Form, sofern es die räumlichen Bedingungen zulassen, in den Prozeß eingebracht werden.

In Übereinstimmung mit der Aufgabenstellung werden bei Einsatz der vorliegenden Lösung Kunststoffrecyclate in hoher Qualität erzielt, die problemlos einer erneuten Verarbeitung zugeführt werden können.

Die Erfindung soll nachstehend an mehreren Beispielen näher erläutert werden.

### Referenzbeispiel 1:

Unzerkleinertes, unbestücktes epoxidharzhaltiges Leiterplattenbasismaterial wird in ein Bad mit Dipropylenglykol gegeben und anschließend bei einer Temperatur von 150 - 230°C mittels eines Blattrührers 4 Stunden intensiv bewegt. Nach Ablauf dieser Zeit ist die Epoxidharzmatrix der Leiterplatten vollständig aufgelöst. Das im Leiterplattenbasismaterial eingebundene, zu seiner Verstärkung dienende Glasgewebe und die Kupferleiterbahnen liegen als feste, ungelöste Fraktionen in der Lösung vor und werden durch einfaches Absieben dem flüssigen, polymere Abbauprodukt separiert. Kupfer und Glasgewebe werden nach der Entnahme mit Wasser abgespült und getrocknet. Durch Windsichten werden Glasgewebe und Kupfer voneinander getrennt und jeweils einer konventionellen Verwertung zugeführt.

Aus dem flüssigen Abbauprodukt wird das Dipropylenglykol mittels Vakuumdestillation bei 5 mbar und 200°abgedampft und ein Harzpolymer als Endprodukt gewonnen.

### Beispiel 2:

Zerkleinerte, mit Epoxidharz verklebte Verbundglasscheiben von Bildröhren werden in ein Bad gegeben, das ein Gemisch aus Diethanolamin und Diethylenglykolmonoethylether in einem Mischungsverhältnis 70 : 30 enthält, und 4 - 10 Stunden bei einer Temperatur von 180 - 220°C gerührt und mit Ultraschall beaufschlagt. Nach Ablauf der Verfahrensdauer wird durch Abdekantieren des flüssigen, polymeren Abbauproduktes und mehrfaches Nachspülen mit Methanol und Dekantieren eine epoxidharzfreie Glasfraktion (nach Trocknung) und ein klares, flüssiges polymeres Abbauprodukt erhalten. Durch Ausfällen in Salzsäure (pH = 2), Filtrieren und anschließender Trocknung erhält man ein Polymerpulver, das mit vorpolymerisiertem Isocyanathärter aus der Polyurethanindustrie im Verhältnis vom 1:1 bis 1:5 gemischt und dann zur Herstellung eines neuen Harzerzeugnisses in eine geeignete Form gegeben wird und dort aushärtet.

### Beispiel 3:

Mit Epoxidharz verklebte Stahlbleche werden in einen mit Methanol aufgefüllten Autoklaven eingegeben, 10 Stunden bei einer Temperatur zwischen 150 und 200°C intensiv bewegt und mit einem Druck von 10 bis 20 bar beaufschlagt. Nach Ablauf der Prozeßdauer sind die Epoxidharze gelöst. Die Bleche werden entnommen, mit Methanol abgespült und getrocknet. Das flüssige polymere Abbauprodukt wird durch Destillation auf 5 % reduziert. Zur Herstellung eines neuen Produktes wird anschließend durch Erwärmen des reduzierten Abbauproduktes und Zugabe eines Härters, beispielsweise Isocyanat oder Diphenylmethandiisocyanat eine erneute Reaktion durchgeführt, wobei das in dem flüssigen Abbprodukt enthaltene Methanol als Schäumungsmittel dient.

### Referenzbeispiel 4:

Unzerkleinerte mit elekronischen Baugruppen bestückte epoxidharzhaltige Leiterplatten mit in das Leiterplattenbasismaterial einpolymerisierte Flammschutzmittel werden in einen Behälter mit Diethylenglykol gegeben und bei einer Temperatur von 150 - 225°C mit einem Blattrührer 8 Stunden intensiv gerührt. Nach dieser Zeit sind die Epoxidharzmatrix der Leiterplatten und die Vergußmassen vollständig aufgelöst. Das Glasgewebe und das Netz der Kupferleiterbahnen mit den daran angelöteten Metallresten der Baugruppen werden durch einfaches Absieben von dem flüssigen, polymeren Abbauprodukt separiert, danach mit Diethylenglykol und mit Wasser gespült. Durch Schwimm-Sink-Trennung in einer geeigneten Salzlösung werden Glasgewebe und Metallfraktion voneinander getrennt und jeweils einer konventionellen Verwertung zugeführt.

Durch Ausfällen mit Wasser wird aus dem flüssigen Abbauprodukt abschließend ein Harzpolymer erhalten.

### Beispiel 5:

Eine aus den Verfahren nach Beispiel 1 - 4 enstandene flüssige Lösungsfraktion, bestehend aus den Abbauprodukten von 50 g Epoxidharz in 250 ml Diaminohexan wird bei einer Temperatur von 80 - 100°C (Restwärme aus Abbaureaktion) mit 10 g Phthalsäureanhydrid vermischt und in eine Form für die Herstellung einer Kunststoffplatte gegossen. Nach Ablauf der Reaktionszeit von kann das neue Produkt entnommen werden.

### Beispiel 6:

Eine Lösungsfraktion, bestehend aus 50 g Epoxidharz und 250 ml Dipropylenglykol, wird durch Vakuumdestillation auf 50 ml aufkonzentriert. Die konzentrierte Flüssigkeit wird mit 50 ml Hexamethylendiisocynat vermischt. Ein Glasfasergewebe wird in eine flache Wanne gelegt und mit der Flüssigkeit übergossen. Nach 24 Stunden wird das neue Bauteil in Form einer Glasfaser verstärkten Kunststoffplatte aus der Form entnommen.

### Beispiel 7:

Eine Lösungsfraktion aus der Behandlung von epoxidhaltigen Produkten nach den Beispielen 1 bis 4, bestehend aus 50 g Epoxidharz in 250 ml Dipropylenglykol, wird in 5 1 verdünnte Salzsäure (pH = 5) eingerührt. Das ausfallende Polymerpulver wird durch Filtration von der Flüssigkeit abgetrennt, anschließend mit 50 ml Hexamethylendiisocyanat vermischt, mit Pigmenten versetzt und in eine Wannenform gegossen. Nach Aushärtung kann das gewünschte neue Produkt entnommen werden.

### Beispiel 8:

Eine Lösungsfraktion aus der Behandlung von epoxidhaltigen Stoffen nach den Beispielen 1 bis 4, bestehend aus 50 g Epoxidharz in 250 ml Dipropylenglykol, wird in 5 l verdünnte Salzsäure (pH = 5) eingerührt. Das ausfallende Polymerpulver wird durch Filtration von der Flüssigkeit abgetrennt, anschließend mit einem vorpolymerisierten Isocyanathärter und 10 ml Dipropylenglykol vermischt, mit Pigmenten versetzt und in eine Wannenform gegossen. Nach Aushärtung kann das gewünschte neue Produkt entnommen werden.

### Beispiel 9:

Eine Flüssigkeit, bestehend aus 50 g Epoxidharz gelöst in 250 ml Diethylenglykol, wird in 5 l Natronlauge (pH = 8) eingerührt. Das ausfallende Polymerpulver wird durch Filtration von der Flüssigkeitsphase abgetrennt. Das Polymerpulver wird mit 100 g Maleinsäureanhydrid vermischt und als Beschichtungsmaterial auf ein entfettetes Stahlblech aufgetragen. Nach Warmhärtung bei 100°C ist die Beschichtung ausgehärtet.

## Patentansprüche

1. Verfahren für das Recycling von Epoxidharz enthaltenden Erzeugnissen und Stoffen und zur Wieder- und Weiterverwertung der Abbauprodukte, **dadurch gekennzeichnet, daß** das zu recycelnde Ausgangsmaterial mit einem oder mit mehreren polaren Lösungsmitteln in Berührung gebracht, und die Epoxidharzanteile in eine flüssige Phase überführt werden; danach aus diesem Abbauprodukt die festen Anteile abgetrennt und anschließend der polymeren flüssigen Phase des Abbauproduktes ein Reaktionsmittel, das mit den gelösten Harzanteilen und gegebenenfalls dem eingesetzten Lösungsmittel reagiert, zugesetzt und die neugebildete polymere Phase einer Weiterverarbeitung zur Herstellung eines neuen Produktes zugeführt wird.

2. Verfahren nach Anspruch 1, **dadurch gekennzeichnet, daß** das Lösungsmittel aus der Gruppe der Amine, Formamide, Ester, Ether und Alkohole, insbesondere Glykole ausgewählt ist.

3. Verfahren nach Anspruch 1 **dadurch gekennzeichnet, daß** die abgetrennten, in Lösung befindlichen Epoxidharze vor der Aufbaureaktion mit Hilfe von Alkoholen, Säuren oder Laugen in chemisch reiner oder verunreinigter Form ausgefällt und herausgelöst werden.

4. Verfahren nach Anspruch 1, **dadurch gekennzeichnet, daß** das zu recycelnde Epoxidharz enthaltende Ausgangsmaterial in aufbereiteter oder unaufbereiteter Form eingesetzt wird.

5. Verfahren nach Anspruch 1, **dadurch gekennzeichnet, daß** der Prozeß zur Bildung der Abbauprodukte bei einer Temperatur von 140 - 280°C und einer Prozeßdauer von 2 - 10 Stunden, vorzugsweise unter Einwirkung mechanischen Kräfte und gegebenenfalls unter Druckbeaufschlagung durchgeführt wird.

6. Verfahren nach Anspruch 1, **dadurch gekennzeichnet, daß** die Behandlung unter Schutzgasatmosphäre vorgenommen wird.

7. Verfahren nach Anspruch 1, **dadurch gekennzeichnet, daß** die Behandlung zur Veränderung der chemischphysikalischen Struktur der Epoxidharzanteile unter Beaufschlagung mit Ultraschall erfolgt.

8. Verfahren nach Anspruch 1, **dadurch gekennzeichnet, daß** die festen und ungelösten Fraktionen durch Sieben oder Dichtetrennverfahren aus dem polymeren Abbauprodukt herausgelöst werden.

9. Verfahren nach Anspruch 1, **dadurch gekennzeichnet, daß** die geeigneten, festen Fraktionen des Abbauproduktes in der organischen, polymeren Fraktion aus Lösungsmittel und gelöstem Epoxidharz belassen und in Recyclaten als Verstärkungsmittel verwendet werden.

10. Verfahren nach Anspruch 1, **dadurch gekennzeichnet, daß** die eingesetzten Lösungsmittel vor der Aufbaureaktion teilweise durch Abdampfen yon den Harzanteilen abgetrennt werden.

11. Verfahren nach Anspruch 1, **dadurch gekennzeichnet, daß** die eingesetzten Lösungs- und/oder Fällungsmittel als Reaktionsmittel für spätere Polymerisations- oder Vernetzungsreaktionen der flüssigen, polymeren Abbauprodukte dienen.

12. Verfahren nach Anspruch 1, **dadurch gekennzeichnet, daß** die eingesetzten Lösungs- und/oder Fällungsmittel als Schäumungsmittel dienen.

13. Verfahren nach Anspruch 1 **dadurch gekennzeichnet, daß** als Reaktionsmittel ein Härter aus der Gruppe der Isocyanate, Säureanhydride, Amine oder Aldehyde ausgewählt ist.

14. Verfahren nach Anspruch 1 und 13 **dadurch gekennzeichnet, daß** das Reaktionsmittel einen Radikalstarter, wie Peroxide oder AIBN, enthält.

15. Verfahren nach Anspruch 1, **dadurch gekennzeichnet, daß** Monomere und niedermolekularen Anteile durch Ausfällen oder Extraktion vor der Aufbaureaktion abgetrennt werden.

16. Verfahren nach Anspruch 1, **dadurch gekennzeichnet, daß** vor der Aufbaureaktion Stabilisatoren, Katalysatoren, Farbstoffe oder Pigmente zugegeben werden.

17. Verfahren nach Anspruch 1, **dadurch gekennzeichnet, daß** die Aufbaureaktionen als entgegengesetz wirkende Reaktion direkt im Anschluß an den Abschluß der Abbaureaktionen unter Nutzung der Restwärme zur Reaktionsbeschleunigung durchgeführt werden.

## Claims

1. Process for the recycling of epoxy resin containing products and materials and for reuse and further utilisation of products of degradation, comprising: the material to be recycled is put into contact with one or several polar solvents and the epoxy resin is transferred into a liquid phase; subsequently the solid parts are separated from these products of degradation and afterwards to the liquid polymer phase of the degraded products a reagent, which reacts with the dissolved resin parts , and in case with the used solvent, is added; the new formed polymer phase is leaded to a subsequent treatment to form a new product.

2. The process according to claim 1, wherein the solvent is chosen out of the groups of amines, formamides, esters, ethers and alcohols, particularly glycoles.

3. The process according to claim 1, wherein the separated epoxy resins present in solvent are precipitated by aid of alcohols, acids or alkalines in chemical pure or in impure form and then separated previously to the upgrading reaction.

4. The process according to claim 1, wherein the epoxy resin containing material which is to be recycled is put in in a prepared or unprepared form.

5. The process according to claim 1, wherein the process to build the degraded products is executed at a temperature of 140-280°C in a process period of 2-10 hours, preferably under influence of mechanical forces and in case under pressure.

6. The process according to claim 1, wherein the treatment is executed under a protection gas.

7. The process according to claim 1, wherein the treatment leading to a change in the physical-chemical structure of the epoxy resin is executed in presence of ultrasonic.

8. The process according to claim 1, wherein the solid and undissolved parts are separated by sieving or methods of separation by density from the degraded polymer products.

9. The process according to claim 1, wherein useful solid parts of the degraded product are left in the organic polymer fraction consisting of solvent and dissolved epoxy resin and are used as reinforcement in the recycling material.

10. The process according to claim 1, wherein the used solvent is separated to some extend from the resin by evaporation previously to the upgrading reaction.

11. The process according to claim 1, wherein the used solvents and/or the precipitation agents are used as reacting agent in further polymerisation or curing reaction for the liquid polymer degraded products.

12. The process according to claim 1, wherein the used solvents and/or the precipitation agents are used as foaming agent.

13. The process according to claim 1, wherein a reagent out of the groups isocyanates, acidanhydrides, amines or aldehydes is used as hardening agent.

14. The process according to claim 1 and 13, wherein the reagent contains a radical starter like peroxides or AIBN.

15. The process according to claim 1, wherein monomers or substances of low molecular weight are separated by precipitation or extraction previously to the upgrading reaction.

16. The process according to claim 1, wherein stabilisers, catalysts, colouring matters or pigments are added previously to the upgrading reaction.

17. The process according to claim 1, wherein the upgrading reaction is executed as opposite reaction directly after the end of the degrading reaction, using the remaining heat to accelerate the reaction.

## Revendications

1. Procédé pour le recyclage des produits et matériaux contenant de la résine époxy et pour la récupération des produits dégradés, **caractérisé en ce que** le produit de départ à recycler soit mis en contact avec un ou plusieurs solvants polaires et les parts de résine époxy soient transférés dans une phase liquide; ensuite les parts solides soient séparés de ce produit de dégradation et un réactif soit amené, qui réagit avec les parts de résine dilués et en cas échéant avec le solvant, et la nouvelle phase polymère qui est formée soit amenée à un traitement ultérieur de production d'un nouveau produit.

2. Procédé selon la revendication 1, **caractérisé en ce que** le solvant soit choisit des groupes des amines, des formamides, des esters, des éthers et des alcools, particulièrement des glycols.

3. Procédé selon la revendication 1, **caractérisé en ce que** les résines époxys dégradées, présent en solvant, soient précipitées par l'aide des alcools, des acides ou des lessives en forme chimiquement pur ou en forme désuni et soient séparées ensuite.

4. Procédé selon la revendication 1, **caractérisé en ce que** le produit de départ à recycler, contenant de la résine époxy, est amené en forme préparée ou pas préparée.

5. Procédé selon la revendication 1, **caractérisé en ce que** le procédé de dégradation soit exécuté avec une température de 140-280°C et une duré de 2-10 heures, de préférence sous l'influence des forces mécaniques, et en cas échéant sous l'influence de pression.

6. Procédé selon la revendication 1, **caractérisé en ce que** le traitement soit exécuté sous un gaz protégeant.

7. Procédé selon la revendication 1, **caractérisé en ce que** le traitement causant le changement dans la structure chimico-physique de la résine époxy soit exécuté sous l'influence de ultrason.

8. Procédé selon la revendication 1, **caractérisé en ce que** les fractions solides et pas diluées soient séparées par tamis (crépines) ou par des méthodes de séparation par densité.

9. Procédé selon la revendication 1, **caractérisé en ce que** des fractions solides et capables du produit de dégradation soient à rester dans la fraction organique et polymère, se composant de solvant et de la résine époxy diluée et soient utilisées comme réinforcement.

10. Procédé selon la revendication 1, **caractérisé en ce que** les solvants utilisés soient séparés partiellement des résines par évaporation avant la réaction augmentant le poids moléculaire.

11. Procédé selon la revendication 1, **caractérisé en ce que** les solvants et/ou précipitants soient utilisés suivant comme réactifs dans les réactions de polymérisation ou de durcissement des produits de dégradation liquides et polymères.

12. Procédé selon la revendication 1, **caractérisé en ce que** les solvants et/ou précipitants soient utilisés comme agent moussant.

13. Procédé selon la revendication 1, **caractérisé en ce que** un durcisseur des groupes des isocyanates, acideanhydrides, amines ou aldéhydes soit choisit comme réactif.

14. Procédé selon la revendication 1, **caractérisé en ce que** le réactif contienne un initiateur radicale, comme peroxydes ou AIBN.

15. Procédé selon les revendications 1 et 13, **caractérisé en ce que** des monomères ou des parts poids moléculaire bas soient séparés par précipitation ou extraction.

16. Procédé selon la revendication 1, **caractérisé en ce qu'**avant la réaction augmentant le poids moléculaire des stabilisateurs, des catalyseur, des couleurs ou des pigments soient ajoutés.

17. Procédé selon la revendication 1, **caractérisé en ce que** la réaction augmentant le poids moléculaire soit exécutée comme réaction contraire immédiatement à la fin de la dégradation en utilisant la chaleur restante pour accélération.
